# EUROPÄISCHE PATENTSCHRIFT

(11) **EP 1 417 114 B1**
(45) Veröffentlichungstag und Bekanntmachung des Hinweises auf die Patenterteilung: **18.01.2006**
(21) Anmeldenummer: 02760286.1
(22) Anmeldetag: 27.07.2002
(51) Int. Cl.: B60N 2/56

(54) **KLIMATISIERTES POLSTERTEIL FÜR EINEN FAHRZEUGSITZ**
AIR-CONDITIONED UPHOLSTERED ELEMENT FOR THE SEAT OF A MOTOR VEHICLE
PIECE DE CAPITONNAGE CLIMATISEE POUR SIEGE DE VEHICULE AUTOMOBILE

(30) Priorität: 28.07.2001 DE 20112473 U
(43) Veröffentlichungstag der Anmeldung: 12.05.2004
(73) Patentinhaber: Johnson Controls GmbH, 51399 Burscheid (DE)
(72) Erfinder: HARTWICH, Dirk, 42399 Wuppertal (DE); SCHMALE, Gerhard, 42499 Hückeswagen (DE)
(74) Vertreter: Wolff, Felix
(86) Internationale Anmeldenummer: PCT/EP2002/008408
(87) Internationale Veröffentlichungsnummer: WO 2003/011633

(56) Entgegenhaltungen:
- DE-A- 10 001 314
- US-A- 5 597 200
- US-A- 5 934 748
- US-A- 6 062 641
- US-A- 6 068 332
- US-B1- 6 186 592

## Beschreibung

Die vorliegende Erfindung betrifft ein Polsterteil für ein unteres sitzteil und/oder eine Rückenlehne eines klimatisierten Fahrzeugsitzes mit einem elastischen, luftdurchlässigen Polsterbasisteil und einer flächig auf dem Basisteil angeordneten luftdurchlässigen Klimaschicht, die aus mindestens zwei Teilschichten besteht und zwar einer dem Basisteil zugekehrten Unterschicht und einer auf der Unterschicht liegenden Oberschicht.

Die W-A-099/50090 beschreibt ein solches Sitzpolsterteil, wobei das Basisteil aus einem einstühckig aus Kunststoff geschäumten Kernteil besteht. Für einen Klimakomfort weist das Kernteil Löcher auf, die sich vollständig durch das Kernteil hindurch erstrecken und somit beidseitig randoffen sind. Die durchgehenden Löcher erlauben einen effektiven Luft- und Feuchtigkeitsaustausch durch das Kernteil hindurch, und zwar auch ohne aktive Mittel, wie Ventilatoren oder dergleichen. Es handelt sich daher um ein rein passives Klimasystem. Auf dem Kernteil ist eine Deckschicht angeordnet, die einerseits eine Sitzdruckverteilung und andererseits einen Feuchtigkeitstransport durch die Löcher des Kernteils ermöglichen soll. Dazu soll die Deckschicht aus einem Material bestehen, welches Feuchtigkeit schnell aufnehmen und auch wieder abgeben kann. Obwohl sich dieses bekannte Sitzpolster bereits gut bewährt hat, wird eine weitere Verbesserung der klimatisierenden und auch mechanischen Eigenschaften angestrebt.

Die US-A-6,186,592 zeigt ein Polsterteil für ein unteres Sitzteil eines klimatisierten Fahrzeugsitzes mit einem elastischen luftdurchlässigen Polsterteil und einer flächig auf dem Basisteil angeordneten luftdurchlässigen Klimaschicht aus mindestens zwei Teilschichten.

Die DE-A-100 01 314 (Spalte 2, Zeilen 6-23 und Figur) offenbart eine Polsteranordnung, bei der die den Polstern zuzuführende Luft durch Aktivkohlefilter von Verunreinigungen befreit wird.

Der vorliegenden Erfindung liegt daher die Aufgabe zugrunde, ein Polsterteil der genannten Art zu schaffen, mit dem sich gleichzeitig sowohl die klimatisierenden Eigenschaften als auch die mechanischen Eigenschaften zur Sitzdruckabstützung und Sitzdruckverteilung mit einfachen und kostengünstigen Mitteln optimieren lassen. Erfindungsgemäß wird dies dadurch erreicht, dass die Oberschicht zumindest anteilig Aktivkohle enthält, die in Partikelform eingebracht ist. Auf diese Weise lassen sich durch nahezu beliebige und geeignete Materialkombinationen der beiden Teilschichten optimale mechanische und auch klimatisierende Eigenschaften erreichen.

Dazu sind vorteilhafte Ausgestaltungsmerkmale und Ausführungsformen in den Unteransprüchen und der folgenden Beschreibung enthalten.

Anhand mehrerer in der Zeichnung veranschaulichter, bevorzugter Ausführungsbeispiele und bestimmter Ausführungsvarianten soll die Erfindung genauer erläutert werden. Dabei zeigen:
- Fig. 1: einen Ausschnitt eines erfindungsgemäßen Polsterteils in einer ersten Ausführungsform mit den wesentlichen Bestandteilen,
- Fig. 2: einen schematischen Gesamtquerschnitt der Ausführung nach Fig. 1 zur Veranschaulichung der klimatisierenden Funktionsweise,
- Fig. 3: mehrere Teilschnittansichten des Polsterteils im Bereich eines Loches
- (3a-3d): eines Basisteils in verschiedenen Ausgestaltungsvarianten des Loches,
- Fig. 4: eine Ansicht ähnlich Fig. 2 mit einem zusätzlichen Bezugmaterial,
- Fig. 5: eine Darstellung analog zu Fig. 1 in einer zweiten Ausführungsform des Polsterteils,
- Fig. 6: eine weitere Darstellung analog zu Fig. 1 in einer Ausführungsvariante zu Fig. 5,
- Fig. 7: einen Querschnitt ähnlich Fig. 2 und 4 in einer anderen Ausführungsform,
- Fig. 8: eine alternative Ausgestaltung zu Fig. 7 in entsprechender Darstellung,
- Fig. 9: eine Darstellung wie in Fig. 7 in einer besonderen Ausgestaltung,
- Fig. 10: einen Teil-Querschnitt durch ein erfindungsgemäßes Polsterteil in einer weiteren Ausführungsvariante und
- Fig. 11: eine stark schematische und im Sitzbereich geschnittene Seitenansicht auf die Einbausituation eines Fahrzeugsitzes in einem Fahrzeug mit einer sitzenden Person.

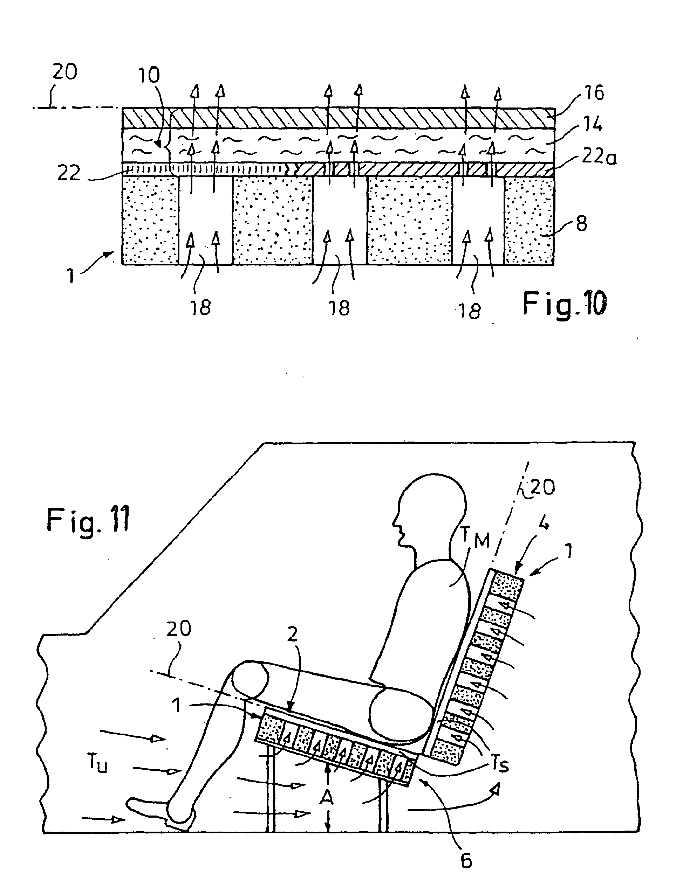

Ein erfindungsgemäßes Polsterteil 1 ist für den Bereich eines unteren Sitzteils 2 und/oder einer Rückenlehne 4 eines vorzugsweise rein passiv klimatisierten Fahrzeugsitzes 6 konzipiert (vgl. dazu insbesondere Fig. 11). Das Polsterteil 1 besteht aus einem elastischen, luft- und feuchtigkeitsdurchlässigen Polster-Basisteil 8 und einer flächig auf dem Basisteil 8 angeordneten Klimaschicht 10. Die Klimaschicht 10 ist ebenfalls gut luftdurchlässig, vorteilhafterweise aber auch feuchtigkeitsdurchlässig (hohe Luft- und Wasserdampfdurchlässigkeit) und/oder feuchtigkeitsabsorbierend. Dies bedeutet, dass die Klimaschicht 10 Feuchtigkeit (Wasserdampf) gut aufnehmen und auch schnell wieder abgeben kann. Die Klimaschicht 10 weist eine hohe Dauerfestigkeit mit einem Dickeverlust < 15 % auf.

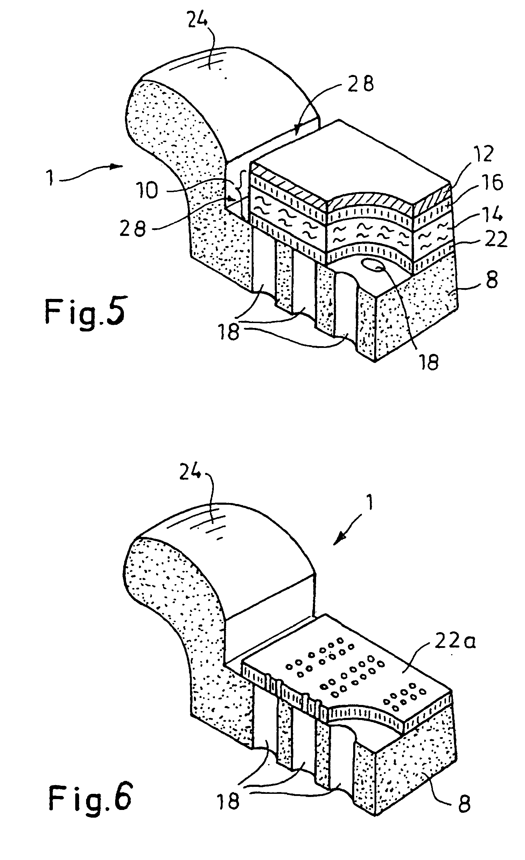

Gemäß Fig. 4 und 7 bis 9 sind das Basisteil 8 und die Klimaschicht 10 gemeinsam mit einem Bezugmaterial 12 überzogen, wobei es sich bevorzugt um eine textile Oberware handelt. Dabei weist das Bezugmaterial bzw. die Oberware 12 zumindest im eigentlichen Sitzflächenbereich, dem sogenannten Sitzspiegel, eine hohe Luft- und Wasserdampfdurchlässigkeit auf. Zweckmäßigerweise gilt dies zumindest für den ganzen, die Klimaschicht 10 überdeckenden Flächenbereich des Bezugmaterials 12. Hier handelt es sich vorzugsweise um einen unlaminierten Stoff; außerhalb dieses Bereichs kann der Stoff auf seiner dem Polsterteil zugekehrten Seite laminiert sein. Die Laminierung der Oberware führt zu einer starken Reduzierung der Durchlässigkeit des Bezugmaterials 12. Dies kann hier aber durch ein direktes Vernähen insbesondere mit der Klimaschicht 10 verhindert werden. Die textile Oberware kann als Rundstrick, Flachgewebe, Wirkvelour bzw. Rundstrickvelour oder Jaquard ausgeführt sein und weist eine Luftdurchlässigkeit von mehr als 450 l/m²/s (nach ISO 9237) auf. Es kann auch ein hydrophiliertes, insbesondere feuchteabsorbierendes Textilmaterial sein und/oder einen Woll-Anteil bis maximal 45 % aufweisen. Zudem kann das Bezugmaterial 12 bzw. die textile Oberware mit im Wesentlichen den genannten Eigenschaften zumindest bereichsweise mit einem Schaum, insbesondere einem PU-Schaum, mit einer Dicke im Bereich von 2 bis 10 mm und einer Stauchhärte von 4 bis 6 kPa kaschiert sein.

Erfindungsgemäß enthält die Oberschicht zumindest anteilig Aktivkohle, die in

Partikelform eingebracht ist.

Die Oberschicht 16 besteht vorzugsweise aus einem feuchtigkeitsabsorbierenden (wasserdampfaufsaugenden) Material. Dazu kann die Oberschicht - zumindest anteilig - ein Vlies, ein hydrophiliertes Textilmaterial, sogenanntes (an sich bekanntes) Gummihaar und vor allem Aktivkohle enthalten. Dazu kann die Oberschicht 16 mit Vorteil aus einem Trägermaterial, insbesondere einem Kunststoffschaum, mit darin in Partikelform eingebrachte Aktivkohle bestehen. Das Trägermaterial kann zusätzlich mit einem Vlies vernadelt sein, welches die Härte dieser Schaum-/Aktivkohleschicht auf ein für ein Sitzpolsterteil geeignetes Maß reduziert. Ferner kann auch über das Volumen (die Dicke) des Vlies-Materials die Härte bzw. "Weichheit" eingestellt werden, wodurch ein weiches Ansitzverhalten erreicht werden kann. Die Feuchteaufnahme dieser Oberschicht 16 sollte ca. 100 g/m² betragen.

Bei der Oberschicht 16 handelt es sich zudem mit Vorteil um ein relativ weiches, d. h. eine Stauchhärte von insbesondere etwa 4 bis 6 kPa sowie dabei eine hohe Luftdurchlässigkeit aufweisendes Material, wobei die Luftdurchlässigkeit größer als 500 l/dm²/min (nach ISO 9237) sein sollte.

Die Unterschicht 14 besteht vorzugsweise aus einem weichen, gering verpressten Gummihaar mit einem Raumgewicht insbesondere etwa im Bereich von 500 bis 800 kg/m³. Es kann sich bei der Unterschicht 14 aber auch um ein Kunststoff-Gewirke mit einer hohen Stauchhärte von insbesondere etwa 10 bis 20 kPa handeln. Jedenfalls soll die Unterschicht 14 eine hohe elastische Rückstellkraft und eine hohe Luft- und Wasserdampfdurchlässigkeit aufweisen.

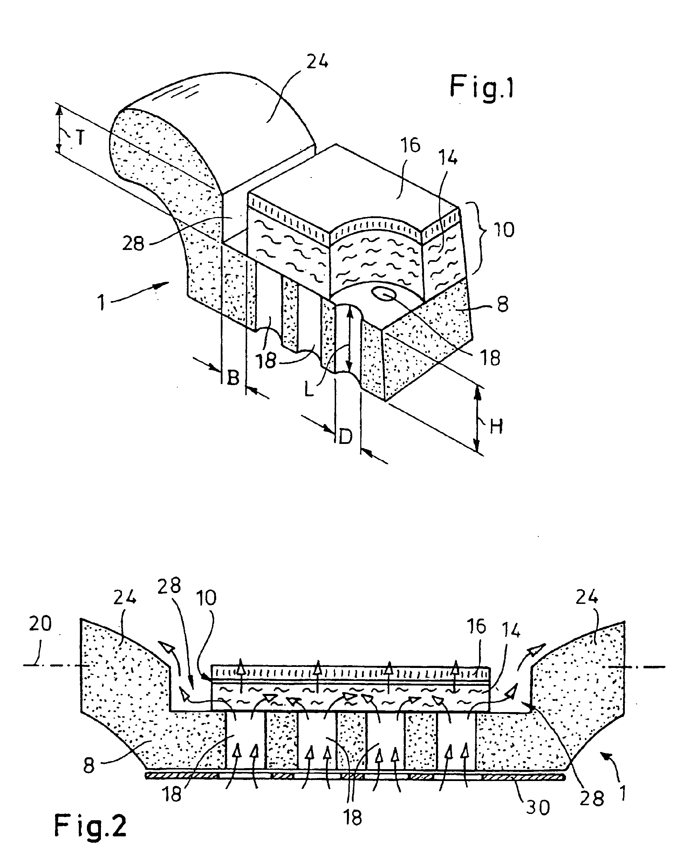

Das Basisteil 8 besteht vorzugsweise aus einem einstückigen Kunststoff-Schaumkörper. Dabei weist das Basisteil 8 für seine hohe Luftdurchlässigkeit über die Sitzfläche verteilt angeordnete Löcher 18 auf, die sich durchgehend in zu einer Sitzhauptebene 20 (vgl. Fig. 2, 4 und 7 bis 9) senkrechter Richtung durch das Basisteil 8 erstrecken. Die Löcher 18 müssen dabei bestimmte geometrische Bedingungen erfüllen. Das Basisteil 8 weist im Flächenbereich der Klimaschicht eine Höhe H auf, so dass die Löcher 18 eine der Höhe H entsprechende Länge L und dabei einen Lochquerschnitt bzw. Durchmesser D aufweisen (Fig. 1). Hierbei sollte das Verhältnis Loch-Länge L zu Querschnitt D im Bereich von 2 : 1 bis 3 : 1 liegen. Bei diesem Verhältnis ist die Energie der im Fahrzeug während der Fahrt auftretenden Schwingungsamplitude (Anregung über Fahrbahn/Bewegunginsasse) ausreichend, um durch eine Art von Pumpwirkung passiv, d. h. ohne zusätzlichen Lüfter, einen Wärme- und Feuchtigkeitsaustausch zu gewährleisten. Bei anderen als den bevorzugt genannten Verhältnissen könnten sich in den Löchern 18 "stehende Wellen" ausbilden, wodurch der angestrebte Wärme - und Feuchtigkeitsaustausch behindert oder sogar ausgeschlossen sein könnte.

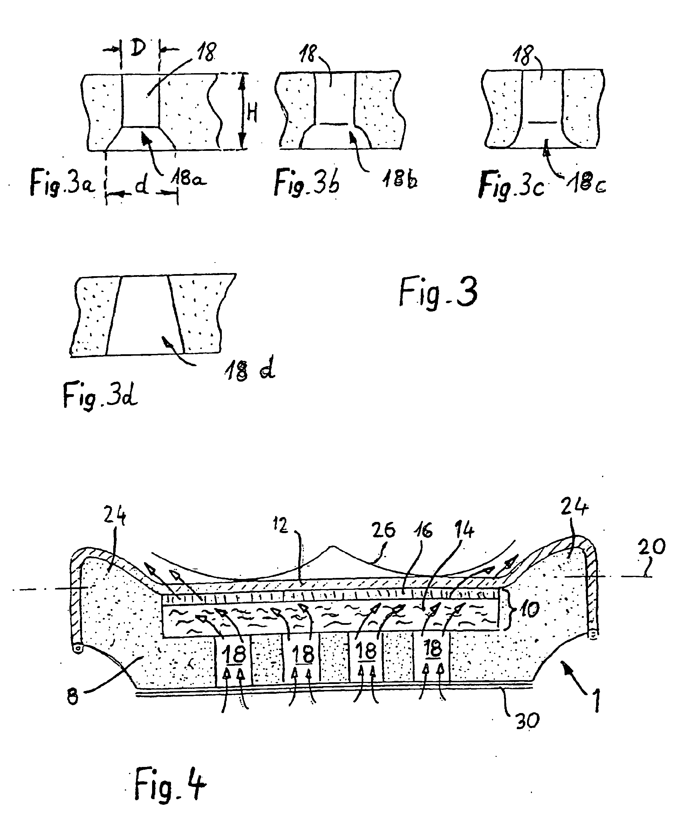

Wie in Fig. 3 dargestellt ist, können die Löcher 18 von einer durchgehend zylindrischen Form abweichen. Gemäß Fig. 3a weist das Loch 18 angrenzend an die Unterseite des Basisteils 8 (Oberseite wäre auch möglich) eine konische Erweiterung 18a auf, so dass der Querschnitt d an der Mündungsseite der Erweiterung größer als der Querschnitt D des zylindrischen Lochbereichs ist. Das Verhältnis d: D sollte etwa 1:1,5 betragen. Die Tiefe bzw. Länge der Erweiterung 18a sollte etwa 1/3 der Höhe H des Basisteils 8 betragen. Gemäß Fig. 3b bis 3d sind auch andere Loch-Konturen möglich, die insbesondere auf der Unterseite einen größeren Querschnitt als im oberen Bereich haben und deren kleinster Durchmesser vorzugsweise 20 mm nicht unterschreiten sollte. So handelt es sich z. B. gemäß Fig. 3b um eine etwa glockenartige Erweiterung 18b mit im Längsschnitt konkav gekrümmter Wandung, während die Erweiterung 18c gemäß Fig. 3c eine konvex gekrümmter Wandung aufweist. Gemäß Fig. 3d ist das Loch 18d durchgehend konisch ausgebildet. In allen Fällen begünstigt die jeweilige Kontur der Löcher 18 den gewünschten Wärme- und Stoff-(Feuchte-) Transport, der zu einer Verbesserung des Klimakomforts führt.

In den bevorzugten Ausführungsformen gemäß Fig. 5 bis 10 liegt zwischen dem Basisteil 8 und der Unterschicht 14 der Klimaschicht 10 eine zusätzliche Zwischenschicht 22 aus einem ebenfalls luftdurchlässigen Material. Dabei ist vorteilhafterweise vorgesehen, dass die Unterschicht 14 relativ weicher (Stauchhärte etwa 5 bis 15 kPa) und die Zwischenschicht 22 derart relativ härter (Stauchhärte etwa 20 bis 50 kPa) ausgebildet sind, dass bei einer Sitzbelastung ein Eindrücken der Unterschicht 14 und auch der Zwischenschicht 22 in die Löcher 18 des Basisteils 8 - und damit auch eine unschöne Dellenbildung auf der oberen Sitzfläche - vermieden wird. Die Zwischenschicht 22 kann mit Vorteil aus einem hochverpressten Gummihaar mit einem höheren Raumgewicht im Bereich von 600 bis 1000 kg/m³, insbesondere um etwa 1000 g/m², bestehen. Alternativ kann es sich auch um ein stark verpresstes, insbesondere perforiertes Vliesmaterial handeln. In einer weiteren Alternative gemäß Fig. 6 besteht die Zwischenschicht 22a aus einer mit vorzugsweise etwa 1,5 bis 4 mm relativ dünnen, zumindest in den die Löcher 18 überdeckenden Bereichen perforierten Kunststoffplatte. Der verwendete Kunststoff muß den Anforderungen der Kfz-Industrie insbesondere bezüglich Brennbarkeit (schwer entflammbar), Recycling usw. erfüllen. Die Zwischenschicht 22 bzw. 22a hat somit generell die Aufgabe, eine ausreichende Biegesteifigkeit zu erzeugen, die mindestens um den Faktor 5 größer als die des Basisteils 8 sein sollte, damit sich die übrigen Schichten der Klimaschicht 10 nicht in die Löcher 18 des Basisteils 8 eindrücken können. Dadurch wird vorteilhafterweise die Gefahr einer Dellenbildung an der Sitz-Oberfläche vermieden. Die Luftdurchlässigkeit der Zwischenschicht 22, 22a sollte in allen Ausführungen einen Wert von etwa 400 l/m²/s nicht unterschreiten.

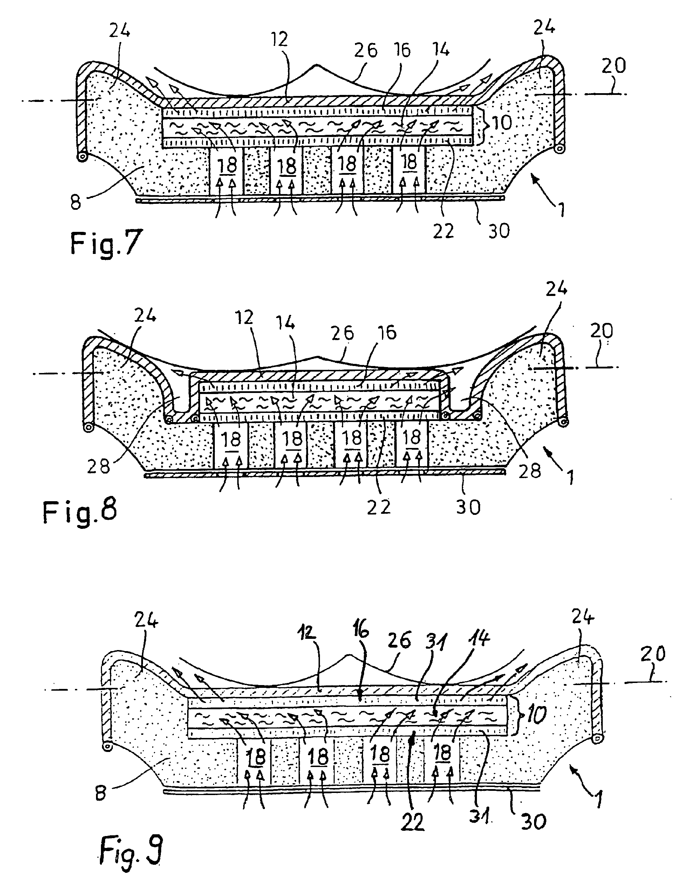

Bei der in Fig. 9 dargestellten Variante sind sowohl die Oberschicht 16 als auch die Zwischenschicht 22 von einem Vliesmaterial 31 gebildet. Die dazwischen liegende Unterschicht 14 kann - wie dargestellt - einlagiges, aber auch z.B. mehrlagiges Gummihaar sein, welches die bereits genannten Eigenschaften aufweist und mit Vorteil Aktivkohle enthält (getränkt). Die Feuchteaufnahme sollte 80 bis 150 g/m² betragen. Das Vliesmaterial 31 kann z. B. als Nadel- oder Spinnvlies eine Luftdurchlässigkeit von 1000 bis 2000 l/m²/s und ein Raumgewicht zwischen 20 und 60 g/m² aufweisen.

In weiterer vorteilhafter Ausgestaltung weist das Basisteil 8 seitliche Randbereiche 24 auf, die zumindest etwa auf das Niveau der Oberseite der Klimaschicht 10 hochgezogen sind und somit zur Seitenabstützung einer auf dem Sitz sitzenden Person 26 (vgl. Fig. 4 und 7 bis 9) vorgesehen sind. In den Ausführungen nach Fig. 1, 2 und 8 sind zwischen der Klimaschicht 10 und den Randbereichen 24 des Basisteils 8 kanalartige Freiräume 28, sogenannte Abheftkanäle, gebildet. Gemäß Fig. 1 weisen diese Freiräume 28 eine senkrecht zur Sitzhauptebene 20 gemessene Tiefe T und eine Breite B auf, wobei die Breite B mindestens 3 mm und bis zu etwa 15 mm betragen sollte, um einen guten Wärme- und Stoff- (Feuchtigkeits-) Abführung zu gewährleisten. Gemäß Fig. 8 ist das Bezugmaterial 12 im Bereich der kanalartigen Freiräume 28 bis in deren Kanalgrund nach unten gezogen und dort verheftet, so dass das Polsterteil 1 auch in seinem fertig bezogenen Zustand die seitlichen kanalartigen Freiräume 28 aufweist. Diese dienen vorteilhafterweise mit zur Luftführung bei gleichzeitig optimaler Seitenabstützung der Person 26 durch die seitlichen Randbereiche 24 des Polsterteils 1. Gemäß Fig. 8 kann die durch die Löcher 18 und die Klimaschicht 10 strömende Luft trotz der sitzenden Person 26 noch seitlich durch die kanalartigen. Freiräume 28 strömen.

Bei den in den Fig. 4, 7 und 9 veranschaulichten Alternativen handelt es sich um Ausführungen mit weniger Seitenhalt, wobei auf die kanalartig vertieften Freiräume 28 verzichtet wird. Statt dessen bilden sich zwischen der Person 26 und den seitlichen Randbereichen 24 Strömungspassagen aus. Hierbei liegt die Klimaschicht 10 im Wesentlichen bündig in einer entsprechenden Aufnahmevertiefung des Basisteils 8.

Wie sich noch aus Fig. 2, 4 und 7 bis 9 ergibt, liegt das Polster-Basisteil 8 vorzugsweise flächig auf einer tragenden Sitzstruktur 30, die beispielsweise von einer Sitzwanne aus Blech oder Kunststoff gebildet ist. Für die angestrebte Klimatisierung ist die Sitzstruktur ebenfalls luftdurchlässig, insbesondere perforiert ausgebildet. Diese luftdurchlässige Sitzstruktur 30 kann auch durch bei Kfz-Sitzen übliche Metallfedern (Sinusfedern oder Pulmaflex-Unterfederungen) gebildet sein.

Bei der in Fig. 10 veranschaulichten Ausführung handelt es sich bei der auf de Zwischenschicht 22 bzw. 22a liegenden Unterschicht 14 um ein Gewirke aus Kunststoff. Dieses Gewirke zeichnet sich durch eine sehr gute Rückstellkraft und sehr gute Luft- und Wasserdampfdurchlässigkeit aus. Da dieses Gewirke eine hohe Stauchhärte insbesondere im Bereich von 10 bis 20 kPa hat, kann die darauf liegende Oberschicht 16 weicher mit einer Stauchhärte von insbesondere 4 bis 6 kPa ausgebildet sein.

Es sei noch erwähnt, dass in allen Fällen, in denen sogenanntes Gummihaar eingesetzt wird, es sich dabei um gebundene Naturfasern (z. B. Tierhaare), aber auch um synthetisch hergestelltes Abstandsgewirke mit entsprechender Stauchhärte und Luftdurchsatz handeln kann.

Anhand der Fig. 11 wird die Erfindung im Zusammenhang mit den klimatischen Bedingungen in einem Fahrzeuginnenraum erläutert.

### 1. Sommerlastfall (Fahrzeug aufgeheizt):

Die Umgebungstemperatur T_{U} im Fahrzeuginnenraum wird vor allem durch Nutzung einer Klimaanlage sehr schnell oder durch Öffnen der Fenster etwas langsamer abgesenkt. Somit ist dann T_{U} kleiner als die Temperatur T_{M} des menschlichen Körpers und die Temperatur T_{S} im Sitzflächenbereich. Aufgrund der Wärmekapazität des Sitzes ist die Temperatur des Sitzes T_{S} größer als die Körpertemperatur T_{M} (Absorption von Strahlungsenergie am Sitz). Wenn T_{S} größer ist als T_{M} kommt es zu einem Wärmestau. Erfindungsgemäß kann nun aufgrund der Löcher 18 die kühlere Temperatur T_{U} schneller die Person erreichen. Wichtig ist hierbei auch der Abstand A zwischen Fahrzeugboden und Sitz. Bei Verwendung einer Klimaanlage wird zusätzlich die Luft entfeuchtet und somit wird die Dampfdruckdifferenz zwischen Sitzoberfläche und Sitzunterseite größer. Feuchtigkeit kann von der Person abtransportiert werden.

### 2. Winterlastfall (Fahrzeug ausgekühlt)

Die Umgebungstemperatur T_{U} im Fahrzeuginnenraum wird durch die Nutzung einer Klima- bzw. Heizungsanlage erwärmt. Diese warme Luft kann dann durch das erfindungsgemäße Polsterteil die Person erreichen. Somit kann vorteilhafterweise die Leistung einer eventuell vorhandenen Sitzheizung verringert werden, oder eine Sitzheizung kann sogar gänzlich entfallen.

## Patentansprüche

1. Polsterteil (1) für ein unteres Sitzteil (2) und/oder eine Rückenlehne (4) eines klimatisierten Fahrzeugsitzes (6), mit einem elastischen, luftdurchlässigen Polster-Basisteil (8) und einer flächig auf dem Basisteil (8) angeordneten, luftdurchlässigen Klimaschicht (10), die aus mindestens zwei Teilschichten (14, 16) besteht, und zwar einer dem Basisteil (8) zugekehrten Unterschicht (14) und einer auf der Unterschicht (14) liegenden Oberschicht (16), **dadurch gekennzeichnet, dass** die Oberschicht (16) zumindest anteilig Aktivkohle enthält, die in Partikelform eingebracht ist.

2. Polsterteil nach Anspruch 1, **dadurch gekennzeichnet, dass** die Oberschicht (16) aus einem feuchtigkeitsabsorbierenden Material besteht.

3. Polsterteil nach Anspruch 1 oder 2, **dadurch gekennzeichnet, dass** die Oberschicht (16) - zumindest anteilig - ein Vlies, ein hydrophiliertes Textilmaterial, Gummihaar enthält.

4. Polsterteil nach einem der Ansprüche 1 bis 3, **dadurch gekennzeichnet, dass** die Oberschicht (16) aus einem Trägermaterial, insbesondere Schaum, mit darin eingebrachter Aktivkohle besteht, wobei das Trägermaterial vorzugsweise mit einem Vlies vernadelt ist.

5. Polsterteil nach einem der Ansprüche 1 bis 4, **dadurch gekennzeichnet, dass** die Oberschicht (16) aus einem relativ weichen, eine Stauchhärte von insbesondere etwa 4 bis 6 kPa sowie eine hohe Luftdurchlässigkeit vorzugsweise von mindestens 500 l/dm2/min aufweisenden Material besteht.

6. Polsterteil nach einem der Ansprüche 1 bis 5, **dadurch gekennzeichnet, dass** die Unterschicht (14) aus einem weichen, gering verpressten Gummihaar mit einem Raumgewicht insbesondere etwa im Bereich von 500 bis 800 kg/m3 besteht.

7. Polsterteil nach einem der Ansprüche 1 bis 5, **dadurch gekennzeichnet, dass** die Unterschicht (14) aus einem Kunststoff-Gewirke mit einer hohen Stauchhärte von insbesondere etwa 5 bis 20 kPa besteht.

8. Polsterteil nach einem der Ansprüche 1 bis 7, **dadurch gekennzeichnet, dass** die Unterschicht (14) eine hohe elastische Rückstellkraft und eine hohe Luft- und Wasserdampfdurchlässigkeit aufweist.

9. Polsterteil nach einem der Ansprüche 1 bis 8, **dadurch gekennzeichnet, dass** das Basisteil (8) aus einem einstückigen Kunststoff-Schaumkörper besteht und für seine Luftdurchlässigkeit über die Sitzfläche verteilt angeordnete Löcher (18) aufweist, die sich durchgehend in zur Sitzhauptebene (20) senkrechter Richtung durch das Basisteil (8) erstrecken.

10. Polsterteil nach Anspruch 9, **dadurch gekennzeichnet, dass** die Löcher(18)jeweils eine von der Höhe (H) des Basisteils (8) bestimmte Länge (L) und einen Querschnitt (D) aufweisen, wobei das Verhältnis Länge (L) zu Querschnitt (D) im Bereich von 2 : 1 bis 3 : 1 liegt.

11. Polsterteil nach Anspruch 9 oder 10, **dadurch gekennzeichnet, dass** zwischen dem Basisteil(8)und der Unterschicht (14) eine Zwischenschicht (22) aus einem luftdurchlässigen Material liegt, wobei die Unterschicht (14) relativ weicher und die Zwischenschicht (22, 22a) derart relativ härter ausgebildet sind, dass bei Sitzbelastung ein Eindrücken der Unterschicht (14) und der Zwischenschicht (22) in die Löcher (18) des Basisteils (8) vermieden wird.

12. Polsterteil nach Anspruch 11, **dadurch gekennzeichnet, dass** die Zwischenschicht (22) aus einem hochverpressten Gummihaar mit einem Raumgewicht von insbesondere etwa 600 bis 1000 kg/m3 besteht.

13. Polsterteil nach Anspruch 11, **dadurch gekennzeichnet, dass** die Zwischenschicht (22) aus einem stark verpressten, insbesondere perforierten Vliesmaterial besteht.

14. Polsterteil nach Anspruch 11, **dadurch gekennzeichnet, dass** die Zwischenschicht (22a) aus einer relativ dünnen, perforierten Kunststoffplatte besteht.

15. Polsterteil nach einem der Ansprüche 1 bis 14, **dadurch gekennzeichnet, dass** das Basisteil (8) zumindest etwa auf das Niveau der Oberseite der Klimaschicht (10) hochgezogene Randbereiche (24) aufweist.

16. Polsterteil nach Anspruch 15, **dadurch gekennzeichnet, dass** zwischen der Klimaschicht (10) und den Randbereichen (24) des Basisteils (8) kanalartige Freiräume (28) gebildet sind.

17. Polsterteil nach einem der Ansprüche 1 bis 16, **dadurch gekennzeichnet, dass** das Polster-Basisteil (8) flächig auf einer luftdurchlässigen, insbesondere perforierten, tragenden Sitzstruktur (30) liegt.

18. Polsterteil nach einem der Ansprüche 1 bis 17, **dadurch gekennzeichnet dass** das Basisteil(8)und die Klimaschicht (10) gemeinsam mit einem Bezugmaterial (12) überzogen sind, wobei das Bezugmaterial (12) zumindest im eigentlichen Sitzflächenbereich eine hohe Luft- und Wasserdampfdurchlässigkeit aufweist.

19. Polsterteil nach dem Oberbegriff des Patentanspruchs 1, **dadurch gekennzeichnet, dass** es rein passiv klimatisiert ist.

## Claims

1. Cushion part (1) for a lower seat part (2) and/or a backrest (4) of an air-conditioned vehicle seat (6), having an elastic, air-permeable cushion base part (8) and an air-permeable air-conditioning layer (10) which is arranged flat on the base part (8) and comprises at least two sublayers (14, 16), specifically a lower layer (14) facing the base part (8) and an upper layer (16) lying on the lower layer (14) **characterized in that** the upper layer (16) at least proportionally contains activated carbon, which is incorporated in particle form.

2. Cushion part according to Claim 1, **characterized in that** the upper layer (16) consists of a moisture-absorbing material.

3. Cushion part according to Claim 1 or 2, **characterized in that** the upper layer (16) contains - at least proportionally - a nonwoven, a hydrophilized textile material, rubberized hair.

4. Cushion part according to one of Claims 1 to 3, **characterized in that** the upper layer (16) consists of a base material, in particular foam, with activated carbon placed in it, the base material preferably being needle-punched with a nonwoven.

5. Cushion part according to one of Claims 1 to 4, **characterized in that** the upper layer (16) consists of a relatively soft material having a compression hardness of, in particular, approximately 4 to 6 kPa and a high air permeability preferably of at least 500 l/dm²/min.

6. Cushion part according to one of Claims 1 to 5, **characterized in that** the lower layer (14) consists of soft, slightly compressed rubberized hair with a relative density in particular approximately in the range of 500 to 800 kg/m³.

7. Cushion part according to one of Claims 1 to 5, **characterized in that** the lower layer (14) consists of a plastic knit with a high compression hardness of, in particular, approximately 5 to 20 kPa.

8. Cushion part according to one of Claims 1 to 7, **characterized in that** the lower layer (14) has a high elastic restoring force and a high air and water-vapour permeability.

9. Cushion part according to one of Claims 1 to 8, **characterized in that** the base part (8) consists of a single-piece foamed-plastic body and, for its air permeability, has holes (18) which are distributed over the seat surface and extend continuously through the base part (8) in a direction perpendicular with respect to the main seat plane (20).

10. Cushion part according to Claim 9, **characterized in that** the holes (18) each have a length (L) which is determined by the height (H) of the base part (8) and a cross section (D), the ratio of length (L) to cross section (D) lying in the range of 2:1 to 3:1.

11. Cushion part according to Claim 9 or 10, **characterized in that** an intermediate layer (22) of an air-permeable material lies between the base part (8) and the lower layer (14), the lower layer (14) being of relatively softer design and the intermediate layer (22, 22a) of relatively harder design in such a manner that, when the seat is subjected to a load, a pressing of the lower layer (14) and of the intermediate layer (22) into the holes (18) of the base part (8) is avoided.

12. Cushion part according to Claim 11, **characterized in that** the intermediate layer (22) consists of highly compressed rubberized hair with a relative density of, in particular, approximately 600 to 1000 kg/m³.

13. Cushion part according to Claim 11, **characterized in that** the intermediate layer (22) consists of a highly compressed, in particular perforated, nonwoven material.

14. Cushion part according to Claim 11, **characterized in that** the intermediate layer (22a) consists of a relatively thin, perforated plastic plate.

15. Cushion part according to one of Claims 1 to 14, **characterized in that** the base part (8) has edge regions (24) which are raised at least approximately to the level of the upper side of the air-conditioning layer (10).

16. Cushion part according to Claim 15, **characterized in that** channel-like clearances (28) are formed between the air-conditioning layer (10) and the edge regions (24) of the base part (8).

17. Cushion part according to one of Claims 1 to 16, **characterized in that** the cushion base part (8) lies flat on an air-permeable, in particular perforated, supporting seat structure (30).

18. Cushion part according to one of Claims 1 to 17, **characterized in that** the base part (8) and the air-conditioning layer (10) are jointly covered by a covering material (12), the covering material (12) having high air and water-vapour permeability at least in the actual seat surface region.

19. Cushion part according to the precharacterizing clause of Patent Claim 1, **characterized in that** it is air-conditioned purely passively.

## Revendications

1. Elément de capitonnage (1) pour l'assise inférieure (2) et/ou le dossier (4) d'un siège climatisé (6) de véhicule, qui présente un élément de base de capitonnage (8) élastique et perméable à l'air et une couche de climatisation (10) perméable à l'air, disposée sur l'élément de base (8) et constituée d'au moins deux parties de couche (14, 16), à savoir une couche inférieure (14) tournée vers l'élément de base (8) et une couche supérieure (16) placée sur la couche inférieure (14), **caractérisé en ce qu'**au moins certaines parties de la couche supérieure (16) contiennent du charbon actif qui y est incorporé sous forme de particules.

2. Elément de capitonnage selon la revendication 1, **caractérisé en ce que** la couche supérieure (16) est constituée d'un matériau qui absorbe l'humidité.

3. Elément de capitonnage selon les revendications 1 ou 2, **caractérisé en ce qu'**au moins certaines parties de la couche supérieure (16) contiennent un feutre, un matériau textile hydrophile ou des fibres de caoutchouc.

4. Elément de capitonnage selon l'une des revendications 1 à 3, **caractérisé en ce que** la couche supérieure (16) est constituée d'un matériau de support, en particulier d'une mousse, dans lequel du charbon actif est incorporé, le matériau de support étant de préférence aiguilleté avec un feutre.

5. Elément de capitonnage selon l'une des revendications 1 à 4, **caractérisé en ce que** la couche supérieure (16) est constituée d'un matériau relativement mou dont la dureté à l'enfoncement est en particulier d'environ 4 à 6 kPa et dont la perméabilité à l'air est élevée, de préférence d'au moins 500 l/dm²/min.

6. Elément de capitonnage selon l'une des revendications 1 à 5, **caractérisé en ce que** la couche inférieure (14) est constituée de fibres de caoutchouc déformables peu comprimées dont la masse spécifique est comprise en particulier sensiblement dans la plage de 500 à 800 kg/m³.

7. Elément de capitonnage selon l'une des revendications 1 à 5, **caractérisé en ce que** la couche inférieure (14) est constituée d'un tricot de matière synthétique à haute dureté à l'écrasement, en particulier d'environ 5 à 20 kPa.

8. Elément de capitonnage selon l'une des revendications 1 à 7, **caractérisé en ce que** la couche inférieure (14) présente une haute force élastique de rappel et une haute perméabilité à l'air et à la vapeur d'eau.

9. Elément de capitonnage selon l'une des revendications 1 à 8, **caractérisé en ce que** l'élément de base (8) est constitué d'un corps d'un seul tenant en mousse de matière synthétique et présente pour sa perméabilité à l'air des trous (18) répartis sur la surface d'assise et qui traversent l'élément de base (8) dans une direction perpendiculaire au plan principal (20) de l'assise.

10. Elément de capitonnage selon la revendication 9, **caractérisé en ce que** les trous (18) ont tous une longueur (L) définie par la hauteur (H) de l'élément de base (8) et un diamètre (D), le rapport entre la longueur (L) et le diamètre (D) étant compris dans la plage de 2 : 1 à 3 : 1.

11. Elément de capitonnage selon les revendications 9 ou 10, **caractérisé en ce qu'**une couche intermédiaire (22) en un matériau perméable à l'air est placée entre l'élément de base (8) et la couche inférieure (14), la couche inférieure (14) étant plus malléable et la couche intermédiaire (22, 22a) étant plus dure de manière à éviter que lorsque l'assise est sollicitée, la couche inférieure (14) et la couche intermédiaire (22) s'enfoncent dans les trous (18) de l'élément de base (8).

12. Elément de capitonnage selon la revendication 11, **caractérisé en ce que** la couche intermédiaire (22) est constituée de fibres de caoutchouc fortement comprimées et dont la masse spécifique est comprise en particulier entre environ 600 et 1000 kg/m³.

13. Elément de capitonnage selon la revendication 11, **caractérisé en ce que** la couche intermédiaire (22) est constituée d'un matériau de feutre fortement comprimé et en particulier perforé.

14. Elément de capitonnage selon la revendication 11, **caractérisé en ce que** la couche intermédiaire (22a) est constituée d'une plaque en matière synthétique perforée et relativement mince.

15. Elément de capitonnage selon l'une des revendications 1 à 14, **caractérisé en ce qu'**au moins sensiblement au niveau du côté supérieur de la couche de climatisation (10), l'élément de base (8) présente des zones de bordure (24) qui débordent vers le haut.

16. Elément de capitonnage selon la revendication 15, **caractérisé en ce que** des espaces libres (28) en forme de canal sont formés entre la couche de climatisation (10) et les zones de bordure (24) de l'élément de base (8).

17. Elément de capitonnage selon l'une des revendications 1 à 16, **caractérisé en ce que** l'élément de base (8) du capitonnage est posé à plat sur une structure porteuse d'assise (30) perméable à l'air et en particulier perforée.

18. Elément de capitonnage selon l'une des revendications 1 à 17, **caractérisé en ce que** l'élément de base (8) et la couche de climatisation (10) sont recouverts ensemble d'un matériau de recouvrement (12), le matériau de recouvrement (12) présentant une haute perméabilité à l'air et à la vapeur d'eau au moins dans la zone de la surface d'assise proprement dite.

19. Elément de capitonnage selon le préambule de la revendication 1, **caractérisé en ce qu'**il est climatisé purement passivement.
